(19) Europäisches Patentamt
European Patent Office
Office européen des brevets

(11) EP 2 409 762 A1

(12) **EUROPEAN PATENT APPLICATION**

(43) Date of publication:
**25.01.2012 Bulletin 2012/04**

(21) Application number: **11174450.4**

(22) Date of filing: **19.07.2011**

(51) Int Cl.:
***B01J 31/02*** *(2006.01)* ***B01J 13/00*** *(2006.01)*
***B01J 23/50*** *(2006.01)* ***B01J 35/00*** *(2006.01)*
***C23C 18/20*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.07.2010 US 365911 P**

(71) Applicant: **Rohm and Haas Electronic Materials LLC**
**Marlborough, MA 01752 (US)**

(72) Inventor: **LEVEY, Peter R.**
**Marlborough, MA 01752 (US)**

(74) Representative: **Buckley, Guy Julian**
**Patent Outsourcing Limited**
**1 King Street**
**Bakewell**
**Derbyshire DE45 1DZ (GB)**

(54) **A composition of nanoparticles**

(57) Catalytic nanoparticles are coated with a layer of an amphoteric surfactant to stabilize the nanoparaticles for electroless metal plating.

EP 2 409 762 A1

## Description

This application claims the benefit of priority under 35 U.S.C. §119(e) to U.S. Provisional Application No. 61/365,911, filed July 20, 2010, the entire contents of which application are incorporated herein by reference.

The present invention is directed to a composition of nanoparticles coated with a layer of an amphoteric surfactant. More specifically, the present invention is directed to a composition of nanoparticles coated with a layer of an amphoteric surfactant where the composition of nanoparticles functions as a catalyst for electroless metal plating.

Nanoparticles have properties that are valuable in a variety of applications, such as biology, chemistry, material science and medicine. The usefulness of the nanoparticles is limited by their stability or toxicity. The nature of the coating on nanoparticles influences their physical and chemical behavior. The coating on a nanoparticle determines the surface properties of the coated nanoparticle. For example US 2008/0089836 discloses metal nanoparticles which are coated with a bilayer of molecules formed from surface binding molecules and amphiphatic molecules. The surface binding molecules are in direct contact with the nanoparticle and include a hydrophobic moiety and a moiety which has an affinity for the nanoparticle. The amphiphatic layer includes both a hydrophobic moiety and a hydrophilic moiety. The surface binding layer and the amphiphatic layer are held together by hydrophobic interactions. The hydrophilic moiety of the amphiphatic layer confers desirable properties to the external environment, such as increasing the water solubility of the nanoparticle. The diameter of the nanoparticles may range in size from 1 nm to 200 nm (nanometers). The nanoparticles disclosed in US 2008/0089836 are substantially directed to biological applications, such as immunolabeling, medical imaging and medical therapy.

Typically, nanoparticles are used in coatings. Coatings play an important role in many industries, such as paints, magnetic disks, phosphor screens, non-stick surfaces, reflectors, abrasives, rust inhibitors, water proofing, adhesives, catalytic surfaces as well as numerous other fields.

Various industries use nanoparticles to form catalytic surfaces for electroless plating metals on a substrate. An attribute of electroless plating is that the process is autocatalytic and deposition occurs on a catalytic surface. Electroless plating is based on the presence of a chemical reducing agent being added to the plating bath. Reducing agents supply electrons to positively charged metal ions in the plating bath reducing these ions to metal in a similar manner in which electric current reduces metal ions to metals in electrolytic plating baths.

Electroless plating produces several desirable results. Workers often have difficulty in depositing metal layers of uniform thickness on substrates with crevices or holes using electrolytic methods of plating. This attribute is important in many industries such as in the electronics industry, in which printed circuit or printed wiring boards demand uniform metal deposits plated into high aspect-ratio through-holes. Other properties and applications of electroless plating are deposits which may be produced directly upon nonconductors, deposits in which are often less porous than electrolytic plating and also deposits which often have unconventional chemical, mechanical or magnetic properties, such as higher hardness and wear resistance. Electroless plating using catalysts are also employed in the manufacture of various decorative articles, and in numerous other electronic applications such as in the formation of electromagnetic interference (EMI) and radio frequency interference (RFI) shielding.

In the metallization of printed circuit boards the most common catalyst is a reaction product of a molar excess of stannous tin with palladium ions in hydrochloric acid solution. The reaction product is believed to be a tin-palladium colloid. It is believed that the oxidized tin forms a protective colloid for the palladium and the excess stannous acts as an antioxidant. However, the stannous chloride used to reduce the palladium is costly and the oxidized tin requires a separate step of acceleration. Attempts have been made in the development of palladium catalysts which exclude stannous chloride to help reduce the cost of the catalysts. Such catalysts may include palladium particles as small as around 50 nm; however, the particle size distribution may vary widely and may have a mean particle size of around 200 nm which, in general, has been found to be unsuitable for commercial purposes in the printed circuit board industry due to their instability and overall poor performance. Moreover, palladium itself is very costly and the instability and poor performance of such catalysts increases the cost to both the printed circuit board manufactures as well as the customers.

Attempts have been made to find substitutes for the tin-palladium catalysts, such as colloidal copper catalysts; however, such catalysts are subject to oxidative attack resulting in loss of stability and functionality. They require high concentrations of copper and require highly active copper plating solutions which are of limited stability.

Accordingly, although there are catalysts of metal nanoparticles used in the electroless plating of metals, there is still a need for a catalyst of metal nanopartilces which is stable, cost effective and provides a metal deposit suitable for commercial purposes.

Compositions include metal nanoparticles encapsulated with of one or more amine oxides having a general formula:

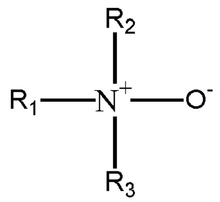

wherein $R_1$ is an unsubstituted ($C_{14}$ to $C_{30}$)alky and $R_2$ and $R_3$ are the same or different and are unsubstituted ($C_1$ to $C_6$)alkyl.

Methods include: a) providing a substrate; b) applying a catalyst composition to the substrate, the catalyst composition includes metal nanoparticles encapsulated with one or more amine oxides having a general formula:

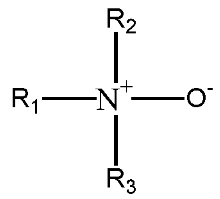

wherein $R_1$ is an unsubstituted ($C_{14}$ to $C_{30}$)alky and $R_2$ and $R_3$ are the same or different and are unsubstituted ($C_1$ to $C_6$)alkyl; and b) electrolessly plating a metal on the substrate.

Methods also include: a) providing a substrate with through-holes; b) desmearing the through-holes; c) applying a composition including cations to the through-holes of the substrate; d) applying a catalyst composition to the through-holes of the substrate, the catalyst composition includes metal nanoparticles encapsulated with one or more amine oxides having a general formula:

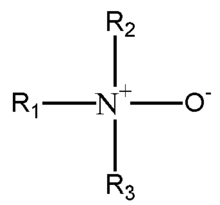

wherein $R_1$ is an unsubstituted ($C_{14}$ to $C_{30}$)alky and $R_2$ and $R_3$ are the same or different and are unsubstituted ($C_1$ to $C_6$)alkyl; and e) electrolessly plating a metal on walls of the through-holes.

The amine oxides having the general formula described above form a layer adjacent to and around the surface of the nanoparticles thus encapsulating the nanoparticles. This enables the catalytic metal nanoparticles to adhere to a surface of a substrate such that a metal may be electrolessly plated on the surface of the substrate. The metal deposit has low porosity and adheres well to the substrate. The catalyst is compatible with standard printed circuit board assembly processes and the compositions of catalytic nanoparticles are stable during electroless plating such that they may be used commercially and the compositions are also stable during storage over prolonged periods of time. In addition, the compositions of catalytic nanoparticles exclude tin and may exclude palladium as a catalytic metal, thus reducing the cost of electroless plating to both the manufacturer and the customer.

The Figure is a graph of sheet-resistivity of copper films plated on surfaces catalyzed with silver metal nanoparticles encapsulated with an amine oxide amphoteric surfactant with a twelve carbon chain and silver metal nanoparticles encapsulated with a mixture of amine oxide amphoteric surfactants with fourteen and sixteen carbon chains as a function of time-of-ageing of the catalyst solutions subject to air exposure.

As used throughout this specification, the abbreviations given below have the following meanings, unless the context clearly indicates otherwise: g = gram; mg = milligram; ppm = parts per million; ml = milliliter; L = liter; cm = centimeter; m = meter; mm = millimeter; $\mu$m = micron; ° C = degrees Centigrade; g/L = grams per liter; wt% = percent by weight; m$\Omega$ = milli-ohms; and $T_g$ = glass transition temperature.

The terms "printed circuit board" and "printed wiring board" are used interchangeably throughout this specification. The terms "plating" and "deposition" are used interchangeably throughout this specification. The term "alky" group refers to an aliphatic hydrocarbon group. The terms "a" and "an" include plural referents unless the context clearly dictates otherwise. All amounts are percent by weight, unless otherwise noted. All numerical ranges are inclusive and combinable in any order except where it is logical that such numerical ranges are constrained to add up to 100%.

The compositions include metal nanoparticles encapsulated with one or more amine oxides which have the following general formula:

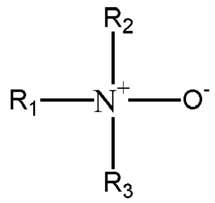

wherein $R_1$ is an unsubstituted ($C_{14}$ to $C_{30}$)alky group and $R_2$ and $R_3$ are the same or different and are unsubstituted ($C_1$ to $C_6$)alkyl group. Typically $R_1$ is ($C_{14}$ to $C_{20}$)alkyl, more typically $R_1$ is ($C_{14}$ to $C_{18}$)alkyl. $R_1$ includes, but is not limited to, the alkyl groups tetradecyl, pentadecyl, hexadecyl, heptadecyl, octadecyl and nonadecyl. Preferably $R_1$ is tetradecyl, hexadecyl or octadecyl. More preferably $R_1$ is tetradecyl and hexadecyl. Typically $R_2$ and $R_3$ are the same. Preferably $R_2$ and $R_3$ are the same and are ($C_1$ to $C_3$) alky. More preferably $R_2$ and $R_3$ are the same and are $C_1$ alkyl. The alkyl groups of $R_2$ and $R_3$ include methyl, ethyl, propyl, isopropyl, butyl, isobutyl, tertiary butyl, pentyl and hexyl. $R_1$, $R_2$ and $R_3$ are non-cyclic hydrocarbon chains.

The amine oxides are alkyl dialkylamine oxide amphoteric surfactants and at a pH of greater than 7 the amine oxides have a net negative charge. The alkyl dialkylamine oxides are well known in the art and many are commercially available or may be made according to methods known in the literature.

The amount of amine oxides included in the catalyst composition is based on the nanoparticles in the composition. The ratio of the weight range of the nanoparticles to amine oxide may range from 1:5 by weight and higher or such as from 1:5 to 1:30 by weight or such as from 1:10 to 1:15 by weight of the catalyst composition.

The metal nanoparticles have average diameters of 50nm and less. Typically, the metal nanopartilces have average diameters of 1nm to 30nm, or such as from 5nm to 20 nm. Catalytic metals include, but are not limited to, silver, gold, platinum, indium, rubidium, ruthenium, rhodium, osmium, iridium, copper, cobalt, nickel, and iron. Typical catalytic metals include silver, gold, and platinum. More typically, silver and gold are the choice of catalytic metals. Preferably, silver is the choice of catalytic metal because it is one of the more thermodynamically stable metals, i.e., corrosion resistant and it is considerably cheaper than palladium, i.e., almost 27 times cheaper than palladium Although palladium may be used as a catalytic metal, silver is preferred over palladium since the colloids are directed to catalysts which avoid the use of palladium to reduce the costs associated with palladium catalysts and at the same time provide a catalyst which is both stable and commercially useful. The compositions preferably exclude palladium. The nanoparticles are inlcuded in the catalyst compositions in amounts of 75 ppm and greater or such as 150 ppm to 250 ppm or such as 180 ppm to 210 ppm.

When metal salts or metal oxides are used, they are reduced to their metal state using one or more reducing agents. Various reducing agents are known in the art. Such reducing agents include, but are not limited to, alkali metal borohydrides, such as sodium borohydride and potassium borohydride, substituted borohydrides, such as trimethoxy borohydrides, boranes, such as amine borane, dimethylamino borane, trimethylamino borane, isopropyl amine borane and morpholine borane, ascorbic acid, iso-ascorbic acid, formic acid, formaldehyde and formaldehyde precursors or derivatives such as paraformaldehyde, trioxane, dimethylhadantoin and glyoxal, and hydrazine and derivative thereof. The reducing agents may be included in the catalyst compositions in amounts of 50% molar excess and higher or such as from 50% to 70% molar excess or such as 50% to 60% molar excess of the metal salts or metal oxides.

The compositions are aqueous colloidal solutions of metal nanoparticles encapsulated with the amine oxides. The composition may be prepared by any suitable method known in the art to prepare nanoparticle colloidal solutions. In one method the reduced metal, metal salts or metal oxides are ball milled to nanoparticles of 50 nm or less. If the metal nanoparticles are prepared from metal salts or metal oxides, they are dissolved in water and mixed with the amine oxides under agitation. The reducing agents are then added to reduce the metal ions to their metal state. The pH of the aqueous solution may be acidic, neutral or alkaline. Typically, the pH of the solution is maintained above 7, or such as from 7.5 to 14, or such as from 8 to 12 to maintain the amine oxide in its anionic state. Typically sodium hydroxide or potassium hydroxide is added to the aqueous solution to adjust the pH to the desired alkaline range. If an acidic solution is desired, typically hydrochloric acid or sulfuric acid is used to adjust the pH. In an acidic solution, the amine oxide has a net positive charge. Acidic solutions have a pH of less than 7, or such as from 1 to 6, or such as from 2 to 4. In a

neutral solution of pH of 7, the amine oxide is substantially in its amphoteric or zwitterion state. Buffering compounds may be used to maintain the stability of the pH. Such compounds include, but are not limited to, amines, such as monoethanolamine, diethanolamine and triethanolamine, borax and phosphates.

The compositions may be used as catalysts for various types of substrates for electroless metallization of the substrates. Such substrates include, but are not limited to, printed circuit boards, such as in the metallization of through-holes and vias, and in the metallization of dielectric materials, such as in the metallization of dielectric surfaces for the formation of EMI and RFI shielding.

The amine oxide encapsulated nanoparticle catalyst compositions may be applied to a wide variety of substrates. Such substrates include, but are not limited to, nonconductors such as plastics, which may be thermoplastic or thermosetting resins. Exemplary thermoplastic resins include, but are not limited to, general-purpose plastics such as PE (polyethylene), PVC (polyvinyl chloride), PS (polystyrene), PP (polypropylene), ABS (acrylonitrile-butadiene-styrene), AS (acrylonitrile-styrene), PMMA (polymethyl methacrylate), PVA (polyvinyl acetate), PVDC (polyvinylidene chloride), PPO (polyphenylene oxide), and PET (polyethylene terephthalate); general-purpose engineering plastics such as PA (polyamide), POM (polyacetal), PC (polycarbonate); PPE (modified polyphenylene ether), PBT (polybutylene terephthalate), GE-PET (glass fiber reinforced polyethylene terephthalate) and UHPE (ultrahigh-molecular weight polyethylene); and super-engineering plastics such as PSF (polysulfone), PES (polyethersulfone), PPS (polyphenylene sulfide), PAR (polyarylate), PAI (polyamideimide), PEEK (polyetheretherketone), PI (polyimide) and fluorocarbon resins. Exemplary thermosetting resins include, but are not limited to, phenolic resins, urea resins, melamine resins, alkyd resins, unsaturated polyesters, epoxy resins, diallyl phthalate polymers, polyurethanes and silicone resins.

Both high and low $T_g$ polymer resin containing substrates can be metalized using the metal nanoparticle catalysts. Low $T_g$ polymer resins are those resins which typically have a Tg of less than 160° C. High Tg polymer resins generally have Tg values of 160° C and greater. Typically high $T_g$ polymer resins have a $T_g$ ranging from 160° C to 280° C or such as from 170° C to 240° C.

Examples of polymer resins include high $T_g$ resins of polytetrafluoroethylene (PTFE) and polytetrafluoroethylene blends. Such blends include, for example, PTFE with polyphenylene oxides and cyanate esters. Other classes of polymer resins which include resins with a high $T_g$ include, but not limited to, epoxy resins, such as difunctional and multifunctional epoxy resins, bimaleimide/triazine and epoxy resins (BT epoxy), epoxy/polyphenylene oxide resins, acrylonitrilebutadienestyrene, polycarbonates (PC), polyphenylene oxides (PPO), polyphenylene ethers (PPE), polyphenylene sulfides (PPS), polysulfones (PS), polyamides, polyesters such as polyethyleneterephthalate (PET) and polybutyleneterephthalate (PBT), polyetheretherketones (PEEK), liquid crystal polymers, polyurethanes, polyetherimides, epoxies and composites thereof.

In the manufacture of printed circuit boards, through-holes are formed in the boards by drilling or punching or any other method known in the art. Small through-holes typically range in diameter of 0.2 mm to 0.5 mm. In contrast, large through-holes typically range in diameter of 0.5 mm to 1 mm. Aspect ratios of through-holes may range from 1:1 to 20:1. If microvias are formed instead of through-holes, typically the microvias have diameters of 50 μm to 300 μm.

After the formation of the through-holes, the boards are rinsed with water and a conventional organic solution is used to clean and degrease the boards followed by desmearing the through-hole walls. Typically desmearing of the through-holes begins with application of a solvent swell.

Any conventional solvent swell may be used to desmear the through-holes. Examples of solvent swells include glycol ethers and their associated ether acetates. Conventional amounts of glycol ethers and their associated ether acetates may be used. Such solvent swells are well known in the art. Examples of commercially available solvent swells are CIRCUPOSIT CONDITIONER™ 3302 Solvent Swell, CIRCUPOSIT HOLE PREP™ 3303 Solvent Swell and CIRCUPOSIT HOLE PREP™ 4120 Solvent Swell (obtainable from The Dow Chemical Company, Marlborough, MA).

Optionally, the through-holes are rinsed with water. A promoter is then applied to the through-holes. Conventional promoters may be used. Such promoters include sulfuric acid, chromic acid, alkaline permanganate or plasma etching. Typically alkaline permanganate is used as the promoter. An example of a commercially available promoter is CIRCUPOSIT PROMOTER™ 4130 Promoter (available from The Dow Chemical Company, Marlborough, MA).

Optionally, the through-holes are rinsed again with water. A neutralizer is then applied to the through-holes to neutralize any acid residues or basic residues left by the promoter. Conventional neutralizers may be used. Typically the neutralizer is an aqueous alkaline solution containing one or more amines or a solution of 3wt% peroxide and 3wt% sulfuric acid. Optionally, the through-holes are rinsed with water and the printed circuit boards are dried.

Optionally, the through-holes and microvias are treated with aqueous alkaline hydroxide solutions. More typically, such aqueous alkaline hydroxide solutions are used when the substrate includes high $T_g$ polymer resin. The alkaline hydroxide solutions include sodium hydroxide, potassium hydroxide or mixtures thereof. Typically a solution of sodium hydroxide is used. The hydroxides are included in the solutions in amounts of 0.1 gm/L to 100 gm/L or such as from 5 gm/L to 25 gm/L. More typically the hydroxides are included in the solutions in amounts of 15 gm/L to 20 gm/L. If the alkaline hydroxide solution is a mixture of sodium hydroxide and potassium hydroxide, the sodium hydroxide and potassium hydroxide are in a weight ratio of 4:1 1 to 1:1, or such as from 3:1 1 to 2:1.

The aqueous alkaline hydroxide solutions may contact the through-holes and microvias for 30 seconds to 120 seconds or such as 60 seconds to 90 seconds. Application of the alkaline hydroxide solutions after desmearing and prior to plating the through-holes or microvias may assist in providing good coverage of the through-hole walls with the encapsulated nanoparticle catalysts thus providing good metal coverage of the walls.

Optionally, a surfactant can be added to the alkaline hydroxide solution. Typically the surfactants are non-ionic surfactants. The surfactants reduce surface tension to enable proper wetting of the through-holes. Surfactants may be included in the alkaline hydroxide solutions in amounts of 0.05wt% to 5wt%, or such as from 0.25wt% to 1wt%. Suitable non-ionic surfactants include, but are not limited to, aliphatic alcohols such as alcohol alkoxylates. Typically such alcohol alkoxylates are alcohol ethoxylates having carbon chains of 7 to 15 carbons, linear or branched, and 4 to 20 moles of ethoxylate, typically 5 to 40 moles of ethoxylate and more typically 5 to 15 moles of ethoxylate. Examples of commercially available alcohol alkoxylates are NEODOL 91-6, NEODOL 91-8 and NEODOL 91-9 (available from Shell Oil Company, Houston, Texas.

Optionally, an acid or alkaline conditioner may be applied to the through-holes or microvias. Conventional conditioners may be used. Such conditioners may include one or more cationic surfactants, non-ionic surfactants, complexing agents and pH adjusters or buffers. Examples of commercially available acid conditioners are CIRCUPOSIT CONDITIONER™ 3320 and CIRCUPOSIT CONDITIONER™ 3327 (available from The Dow Chemical Company, Marlborough, MA). Suitable alkaline conditioners include, but are not limited to, aqueous alkaline surfactant solutions containing one or more quaternary amines and polyamines. Examples of commercially available alkaline surfactants are CIRCUPOSIT CONDITIONER™ 231, 3325, 813 and 860 (available from The Dow Chemical Company). Optionally, the through-holes are rinsed with water after conditioning.

The through-holes or microvias are then microetched. Conventional microeteching compositions may be used. Microetching is designed to provide a micro-roughened surface to enhance subsequent adhesion of deposited metal. Microetches include, but are not limited to, 60 g/L to 120 g/L sodium persulfate or sodium or potassium oxymonopersulfate and sulfuric acid (2%) mixture, or generic sulfuric acid/hydrogen peroxide. An example of a commercially available microetch is CIRCUPOSIT MICROETCH™ 3330 Microetch (available from The Dow Chemical Company). Optionally, the through-holes are rinsed with water.

Prior to application of the encapsulated nanoparticle catalysts, the through-hole or microvia walls are treated to provide a net positive or net negative charge. When the amine oxides encapsulating the nanoparticles have a net negative charge, the walls are treated with cations to form a net positive charge on the walls. Alternatively, when the amine oxides encapsulating the nanoparticles have a net positive charge, the walls are treated with anions to form a net negative charge on the walls. The compositions and methods of making the walls positively or negatively charged are not limited. Typically, the walls are treated with an inorganic acid such as hydrochloric acid, sulfuric acid, nitric acid or cationic polyamines such as those used in water flocculant treatment to provide a net positive charge. Acid solutions may range from 10wt% to 70wt%. Cationic polyamines include, but are not limited to, polycondensates of epichlorohydrin and ammonia, polycondensates of alkylenediamines and epichlorohydrin, such as dimethylamine and epichlorohydrin, polycondensates of polyalkylenepolyamines and epihalohydrins, polycondensates of primary amines and epichlorohydrin, polycondensates of secondary amines and epichlorohydrin. Such cationic polyamines may be made by known methods in the art as well as in the literature. An example of such synthesis methods is disclosed in the artcle "Synthesis of polyamine flocculants and their potential use in treating dye wastewater", Yue et al., School of Environmental Science and Engineering, Shandong University, Jinan 250100, China. Also see U.S. 3,567,659 which discloses methods of making water soluble cationic polymers from epichlorohydrin and methylamine. Examples of commercially available cationic polyamines are NALCO cationic polyamine (available from Nalco Chemical Company, Oak Brook, IL), MICRO FLOCK-90 cationic polyamine (available from Malli Polymers PVT, Ltd. Ahmedabad, Gujarat, India) and CONDITIONERS 860 and 231 (available from The Dow Chemical Company). Such cationic surfactants are used in aqueous solutions of 5wt% to 80wt% or such as 20wt% to 60wt%.

Typically, the walls are treated with an alkaline base, such as sodium hydroxide, potassium hydroxide or anionic surfactants to provide a net negative charge. Aqueous solutions of alkaline bases range from 10wt% to 70wt%. Anionic surfactants are used in aqueous solutions of 10wt% to 80wt% or such as from 20wt% to 60wt%. Such anionic surfactants include, but are not limited to water soluble salts of organic, sulfuric acid reaction products of the general formula:

$$R_4\text{-}SO_3\text{-}M$$

where $R_4$ is chosen from straight or branched chain, saturated aliphatic hydrocarbon radicals of 8 to 24 carbons or such as from 10 to 16 carbon atoms and M is a cation, such as sodium, potassium or ammonium. Examples of such anionic surfactants are sodium lauryl sulfate and ammonium lauryl sulfate.

Other anionic surfactants include sarcosinates, such as sodium laroyl sarcosinate, sodium cocyl sarconsinate and ammonium lauroyl sarcosinate. In addition, other anionic surfactants include alkali metal salts, such as sodium and potassium salts, of fatty acids having from 8 to 24 or such as from 10 to 20 carbon atoms. Such fatty acids are used in

making soaps and can be obtained from plant or animal derived glycerides, e.g. palm oil, coconut oil, soybean oil, castor oil, tallow and lard.

A catalyst of nanoparticles encapsulated with amine oxides is then applied to the charged through-holes or microvias. The substrate with the through-holes or microvias is immersed in solutions of colloidal suspensions with agitation to coat the walls of the through-holes or microvias. Immersion ranges from 100 seconds to 400 seconds or such as from 150 seconds to 250 seconds. Temperatures range from room temperature to 60° C. The through-holes or microvias optionally may be rinsed with water after application of the encapsulated nanoparticle catalysts.

The walls of the through-holes or microvias are then electrolessly plated with a metal. Conventional electroless baths and conventional plating parameters may be used. Typically the printed circuit board is placed in an electroless bath containing the metal ions of the desired metal to be deposited on the walls of the through-holes. Metals which may be deposited on the walls of the through-holes include, but are not limited to, copper, nickel, gold, silver and copper/nickel alloys. Preferably copper is deposited on the walls. A layer of gold or silver finish using immersion gold or silver may also be deposited over a copper, copper/nickel or nickel deposit.

After the metal is deposited on the walls of the through-holes, the through-holes are optionally rinsed with water. Optionally, anti-tarnish compositions may be applied to the metal deposited on the walls of the through-holes. Conventional anti-tarnish compositions may be used. Examples of commercially available anti-tarnish compositions are ANTI TARNISH™ 7130 and CUPRATEC™ 3 (obtainable from The Dow Chemical Company). The through-holes may optionally be rinsed by a hot water rinse at temperatures exceeding 30° C and then the boards may be dried.

In another embodiment the amine oxide encapsulated nanoparticles may be used in the electroless metal plating of substrates for EMI and RFI shielding. Such substrates typically include one or more of the polymer resins described above. Such polymer resins may be high or low $T_g$ resins. The surface of the substrate to be electrolessly plated is first roughened or etched using a conventional etching formulation. The type of conventional etching formulation depends on the type of polymer resin contained in the substrate. Such etching formulations are well known in the art. Examples of etching formulations are alkaline potassium permanganate, 400 g/L chromic acid and 80wt% sulfuric acid with 6 g/L chromic acid.

The colloidal solutions of amine oxide encapsulated nanoparticles may be applied by immersing the substrate into the solution or the solution may be sprayed onto the substrate using a suitable spray apparatus such as an air gun. Brushing is another method of applying the colloidal solution. Optionally, a mask or a tool having a desired pattern may be applied to the substrate prior to applying the colloidal solution such that the colloidal solution is selectively deposited on the substrate, thus a metal film may be selectively deposited on the substrate.

A wet film of from 0.5 to 30 μm of the colloidal solution may be formed on a substrate surface. The colloidal solutions are rinsed off with the charged nanoparticles remaining electrostatically bonded to the oppositely charged substrate. Drying may be by air-drying. Air-drying may take from 20 minutes to 2 hours; however, drying times may be shorter or longer depending on the ambient conditions of the drying room.

After drying the substrate is then electrolessly plated with a desired metal using conventional electroless plating metal baths. Continuous metal films may vary in thickness from 10 nm to 10 μm or such as from 0.1 μm to 5 μm, or such as from 0.5 μm to 2 μm.

Surface resistance of the metal films may vary. Surface resistance may be from 50 $m\Omega/m^2$ or less, or such as from 0.05 $m\Omega/m^2$ to 30 $m\Omega/m^2$, or such as from 1 $m\Omega/m^2$ to 15 $m\Omega/m^2$.

The amine oxides having the general formula described above form a layer adjacent to and around the surface of the nanoparticles thus encapsulating the nanoparticles. This enables the catalytic metal nanoparticles to adhere to a surface of a substrate such that a metal may be electrolessly plated on the surface of the substrate. The metal deposit is dense and adheres well to the substrate. The catalyst is compatible with standard printed circuit board assembly processes and the compositions of catalytic nanoparticles are stable during electroless plating such that they may be used commercially and the compositions are also stable during storage over prolonged periods of time. In addition, the compositions of catalytic nanoparticles exclude tin and may exclude palladium as a catalytic metal, thus reducing the cost of electroless plating to both the manufacturer and the customer.

The following examples are not intended to limit the scope of the invention but are intended to further illustrate it.

<u>Example 1</u>

Four low $T_g$ FR4 epoxy/glass boards (150° C) and four high $T_g$ FR4 epoxy/glass boards (170° C) are obtained from Isola Laminate Systems Corp., LaCrosse Wisconsin. Multiple through-holes are drilled in each of the boards. The through-holes in each board are then desmeared in a horizontal desmear line process as follows:

1. Each board is treated with 240 liters of a solvent swell for 100 seconds at 80° C. The solvent swell is an aqueous solution of 10% diethylene glycol mono butyl ether, a surfactant and 35 g/L of sodium hydroxide.
2. The boards are then rinsed with cold water.

3. The through-holes in each board are then treated with 500 liters of an alkaline promoter of aqueous alkaline permanganate at a pH of 12 for 150 seconds at 80° C.
4. The boards are rinsed with cold water.
5. The though-holes in the boards are then treated with 180 liters of an aqueous neutralizer composed of 3wt% hydrogen peroxide and 3wt% sulfuric acid at room temperature for 75 seconds.
6. The boards are then rinsed with cold water.
7. Two of the low $T_g$ boards and two of the high $T_g$ boards are treated with 150 liters of an aqueous alkaline hydroxide solution containing 18 g/L of sodium hydroxide and 1 g/L of NEODOL 91-8 for 60 seconds at 50° C.
8. The four remaining boards are not treated with the alkaline hydroxide composition. However, one low $T_g$ board and one high $T_g$ board are treated with 190 liters of the aqueous acid conditioner CIRCUPOSIT CONDITIONER™ 3320 for 60 seconds at 50° C.
9. Each of the boards is then rinsed with cold water.
10. The through-holes of each of the boards are then microetched with 100 liters of an aqueous alkaline solution of 20wt% sodium permanganate and 10wt% sodium hydroxide for 60 minutes at 50° C.
11. The boards are then rinsed with cold water.
12. The through-holes are then treated with 5wt% polycondensate of dimethylamine and epichlorohydrin for 40 seconds at room temperature to provide a net positive charge in the through-holes.
13. The through-holes of each board are then primed for 215 seconds at 40° C with 125 liters of an aqueous colloidal catalyst formulation including: a blend of amine oxide amphoteric surfactants composed of 40wt% to 60wt% of tetradecyl-dimethylamine oxide and hexadecyl-dimethylamine oxide encapsulating silver metal nanoparticles having an average size of 50 nm. The weight ratio of the nanoparticles to the blend of amine oxides is 1:12. The pH is 8. The source of the silver is silver nitrate and is reduced to its metal using sodium borohydride.
14. The boards are then rinsed with cold water.
15. The walls of the through-holes of the boards are then plated with electroless copper using an electroless copper bath for 300 seconds at 50° C. The electroless copper bath includes the following components: 0.02 moles/L of copper sulfate pentahydrate, 0.15 moles/L of citric acid, 0.3 mole/L of sodium hypophosphite, 0.003 moles/L of sodium tetraborate and sufficient sodium hydroxide to maintain a pH of 10.
16. After electroless copper deposition the boards are rinsed with cold water.
17. Each board is sectioned laterally to expose the copper plated walls of the through-holes. Multiple lateral sections 1mm thick are taken from the walls of the sectioned through-holes of each board to determine the through-hole wall coverage for the boards using the standard European Backlight Grading Scale.

The 1mm sections from each board are placed under a conventional optical microscope of 50X magnification. The quality of the copper deposit is determined by the amount of light that is observed under the microscope. If no light is observed the section is completely black and is rated a 5 on the backlight scale. If light passes through the entire section without any dark areas, this indicates that there is very little to no copper metal deposition on the wall and the section is rated 0. If sections have some dark regions as wells as light regions, they are rated between 0 and 5.

The holes and gaps are manually counted for each section, tallied and averaged for each board. The results are expected to show that the through-holes of both the low and high $T_g$ boards are rated 4-5 or the walls of the through-holes are substantially completely coated in copper.

Example 2

Two low $T_g$ (150° C) FR4 epoxy/glass boards and two high $T_g$ (170° C) FR4 epoxy/glass boards and eight high $T_g$ (180° C) NELCO 4000-6 boards are provided. Multiple through-holes are drilled into the boards and the holes are desmeared by the same procedure as disclosed in Example 1.

One of the low $T_g$ FR4 boards is treated with an alkaline hydroxide composition containing 7 g/L of sodium hydroxide for 60 seconds at 50° C. One of the high $T_g$ FR4 boards is also treated with an aqueous alkaline hydroxide solution for 60 seconds at 50° C, however, the alkaline hydroxide composition included 18 g/L of sodium hydroxide and 1 g/L of NEODOL 91-8 surfactants.

Through-holes of one NELCO 4000-6 board are treated with an aqueous alkaline composition containing 7 g/L of sodium hydroxide and through-holes of another NELCO 4000-6 board are treated with an aqueous alkaline composition containing 18 g/L of sodium hydroxide. Each board is treated for 60 seconds at 50° C. Through-holes of three of the NELCO boards are treated at 50° C for 60 seconds with an aqueous alkaline hydroxide composition containing 18 g/L of sodium hydroxide and 1 g/L of NEODOL 91-8.

The through-holes of all of the boards are then treated with an acidic conditioner as in Example 1 followed by microetching the through-holes, and applying 10wt% polycondensate of dimethylamine and epichlorohydrin to the through-holes to provide a net positive charge to the through-hole walls.

The through-holes of each board are then primed for 210 seconds at 40° C with 125 liters of an aqueous colloidal catalyst formulation including: a blend of amine oxide amphoteric surfactants composed of 40wt% to 60wt% of tetradecyl-dimethylamine oxide, hexadecyl-dimethylamine oxide and octadecyl-dimethylamine oxide encapsulating silver metal particles having an average size of 40 nm. The weight ratio of the nanoparticles to the blend of amine oxides is 1:13. The pH is 10. The source of the silver is silver nitrate and is reduced to its metal using ascorbic acid.

The boards are then immersed into an electroless copper/nickel alloy bath for 300 seconds at 50° C. The electroless copper/nickel bath has the following formula: 0.02 moles/L of copper sulfate pentahydrate, 0.02 moles/L of nickel sulfate hexahydrate, 0.15 moles/L of citric acid, 0.3 mole/L of sodium hypophosphite, 0.003 moles/L of sodium tetraborate and a sufficient amount of sodium hydroxide to maintain a pH of 10.

After metallization of the through-holes is completed, the boards are baked for six hours at 125° C in accordance with standard procedure IPC-TM 650 2.4.8 rev.D then subjected to thermal cycling prior to laterally sectioning the boards to expose the walls of the through-holes. The thermal cycling involves floating the boards in solder composed of 60% tin and 40% lead (obtainable from Alpha Metals) at 288° C for 10 seconds followed by air cooling the boards for 110 seconds. This cycle is repeated five times.

1mm lateral sections are taken from multiple through-holes of each board. The sections are first analyzed under an optical microscope for the amount of light passing through the copper/nickel deposit along the through-hole walls and compared to the backlight scale to give each section a value. The backlight values are averaged for each board and are expected to be from 4-5.

In addition to determining the backlight values, the through-hole wall pull away of the copper/nickel deposit is determined. The hole wall pull away (HWPA) measures the degree of copper/nickel deposit peeling from the through-hole walls caused by the baking and thermal cycling as observed under the optical microscope using the standard procedure. The scale ranges from 0 to 3. The lower the number the less metal peeling observed. Each through-hole sidewall is graded and the total number of each grade is determined for the number of through-holes assessed. This is then used to calculate the mean through-hole pull away (HWPA) from the equation below.

$$\text{Mean HWPA} = ((\sum \text{Grade 1's}) + (2\sum \text{Grade 2's}) + (3\sum \text{Grade 3's}))/\ \text{number of holes x 2}$$

The mean HWPA for all of the boards is expected to be from 0 to 1.

Example 3 (Comparative)

Two sets of colloidal solutions containing encapsulated silver nanoparticles were prepared. One set included a plurality of colloidal solutions containing 0. 3 g/L of silver nanopartilces having an average particle size of 50 nm encapsulated with dodecyl dimethylamine oxide. The weight ratio of nanoparticles to amine oxide was 1:30. The second set included a plurality of colloidal solutions containing silver nanoparticles having an average particle size of 50 nm encapsulated with a 40wt% to 60wt% mixture of tetradecyl-dimethylamine oxide and hexadecyl-dimethylamine oxide. The weight ratio of silver nanoparticles to amine oxide was 1:10. The source of silver for each set was silver nitrate at a concentration of 0.3 g/L. The silver ions were reduced to their metal using 0.06 g/L sodium borohydride. The amine oxides and silver nitrate were blended together and the reducing agent was added last under agitation supplied by a high-speed Fisher Scientific homogenizer at 30° C. The pH of the colloidal mixtures was maintained at 8.5-11 with sodium hydroxide to form a net negative charge on the amine oxides encapsulating the silver nanopartilces.

A plurality of epoxy/glass-fiber circuit boards was provided. The boards were cationically treated with CIRCUPOSIT CONDITIONER™ 860. Each board was then treated with one of the two types of colloids by immersing the boards in a bath of the colloidal suspensions for 200 seconds at 50° C. The treated boards were then rinsed with water and immersed in a copper electroless plating bath containing: 0.02 moles/L of copper sulfate pentahydrate, 0.15 moles/L of citric acid, 0.3 mole/L of sodium hypophosphite, 0.003 moles/L of sodium tetraborate and sufficient amount of sodium hydroxide to maintain a pH of 10. The temperature of the electroless copper bath was 35° C. Plating was done until a copper film was formed on the surface of the boards of 1μm to 1.5μm thick.

The sheet-resistivity of each of the copper film deposits was measured using a Jandel HM 20 four-point probe. The results were plotted on a Cartesian plane of resistivity in mΩ/square vs. days as shown in the Figure. The results show that at day 1 the sheet-resistivity of the copper deposit plated using the colloids which included the mixture of the tetradecyl-dimethylamine oxide and the hexadecyl-dimethylamine oxide had sheet resistivities from 90 mΩ/square to 100 mΩ/square. In contrast the copper deposits plated with the dodecyl-dimethylamine oxide had higher sheet-resistivities ranging from from 150 mΩ/square to 160 mΩ square. The higher sheet-resistivities of the copper deposit plated using the dodecyl-dimethylamine oxide colloids indicated that those boards had less copper thickness implying that dodecyl-dimethylamine oxide stabilized silver produced a less catalytically active silver colloid..

After a period of four days of storage at 40° C and exposed to the open atmosphere, the colloidal solutions were applied to another plurality of cationically treated epoxy/glass-fiber boards. The boards were treated with the colloidal solutions under the same conditions and plated with the same type of electroless copper plating bath and under the same conditions as above. The sheet-resistivities of the copper films were measured with the four point probe and plotted at day four on the Cartesian plane. From the Figure it can be seen that the sheet-resistivity of the copper films catalyzed with the tetradecyl- and hexadecylamine oxides were much lower and more tightly grouped than the copper films catalyzed with the dodecyl-dimethylamine oxide. Further, the Figure shows that the colloids prepared from the tetradecyl- and hexadecylamine oxides maintained their acitivity over a longer period of time than the dodecyl-dimethylamine oxide colloid.

## Claims

1. A composition comprises metal nanoparticles encapsulated with one or more amine oxides having a general formula:

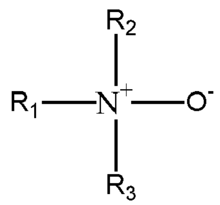

wherein $R_1$ is an unsubstituted ($C_{14}$ to $C_{30}$)alky and $R_2$ and $R_3$ are the same or different and are unsubstituted ($C_1$ to $C_6$)alkyl.

2. The composition of claim 1, wherein $R_1$ is unsubstituted ($C_{14}$ to $C_{20}$)alkyl.

3. The composition of claim 1, wherein $R_2$ and $R_3$ are the same and are unsubstituted ($C_1$ to $C_3$)alkyl.

4. The composition of claim 1, wherein the composition has a pH of greater than 7.

5. The composition of claim 1, wherein the nanoparticles have an average diameter of 50 nm or less.

6. The composition of claim 1, wherein the metal nanoparticles are chosen from silver, gold, platinum, indium, rubidium, ruthenium, rhodium, osmium, iridium, copper, cobalt, nickel, and iron.

7. A method comprising: a) providing a substrate; b) applying a catalyst composition to the substrate, the catalyst composition comprises metal nanoparticles encapsulated with one or more amine oxides having a general formula:

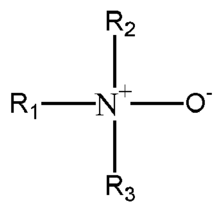

wherein $R_1$ is an unsubstituted ($C_{14}$ to $C_{30}$)alky and $R_2$ and $R_3$ are the same or different and are unsubstituted ($C_1$ to $C_6$)alkyl; and c) electrolessly plating a metal layer on the sub strate.

8. The method of claim 7, wherein the metal layer is chosen from copper, copper alloy, nickel or nickel alloy.

**9.** A method comprising: a) providing a substrate with through-holes; b) desmearing the through-holes; c) applying a composition comprising cations to the through-holes of the substrate; d) applying a catalyst composition to the substrate with through-holes, the catalyst composition comprises metal nanoparticles encapsulated with one or more amine oxides having a general formula:

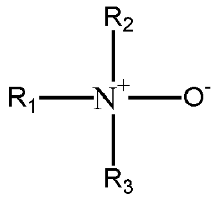

wherein $R_1$ is an unsubstituted ($C_{14}$ to $C_{30}$)alky and $R_2$ and $R_3$ are the same or different and are unsubstituted ($C_1$ to $C_6$)alkyl; and e) electrolessly plating a metal layer on walls of the through-holes.

**10.** The method of claim 9, wherein a source of cations is cationic polyamines.

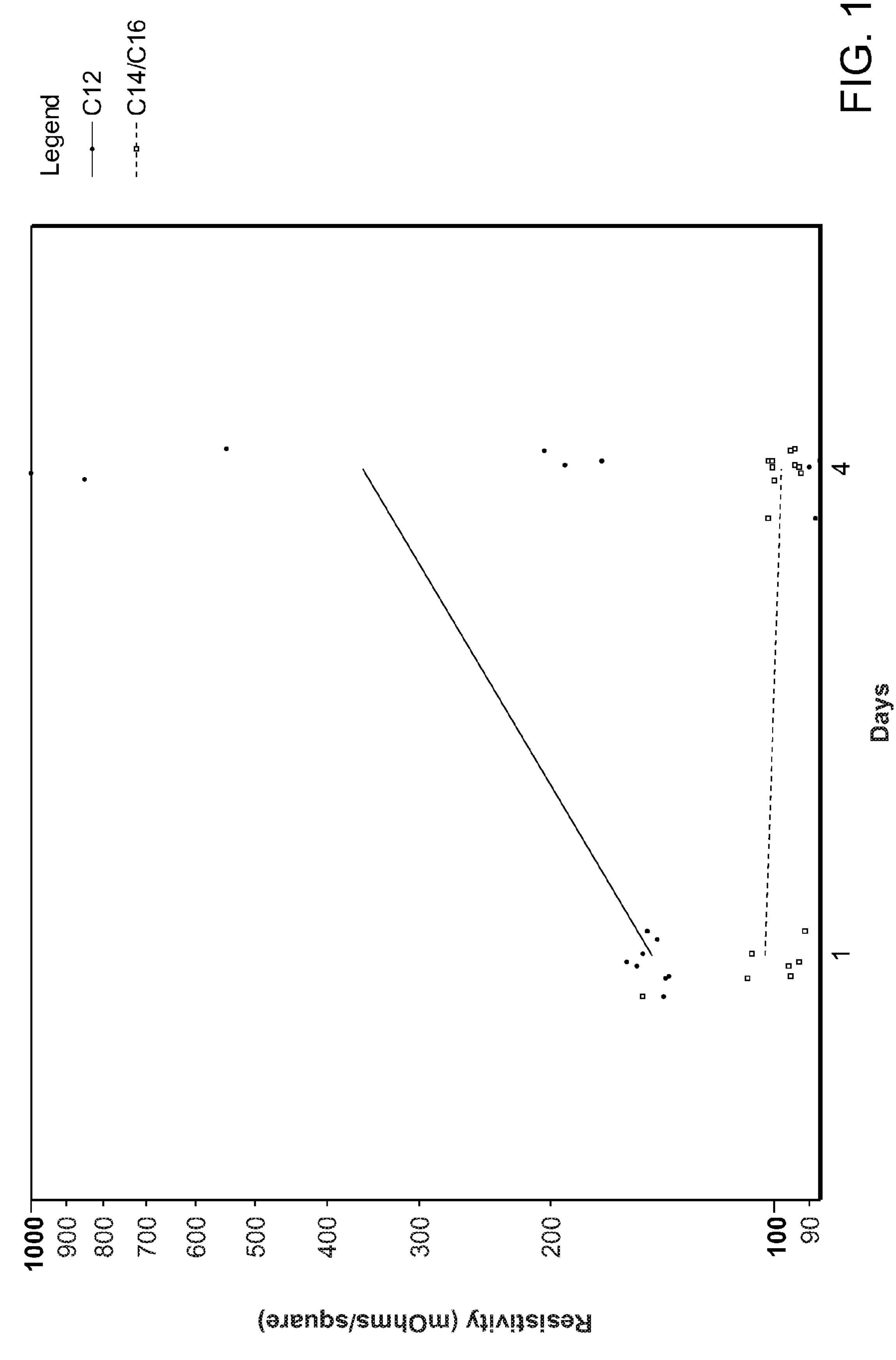
Legend
C12
C14/C16
Resistivity (mOhms/square)
1000
900
800
700
600
500
400
300
200
100
90
Days
1
4

FIG. 1

Europäisches Patentamt
European Patent Office
Office européen des brevets

# EUROPEAN SEARCH REPORT

Application Number
EP 11 17 4450

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/032915 A1 (NAKAGAWA HIROFUMI [JP] ET AL) 10 February 2005 (2005-02-10)<br>* paragraphs [0016] - [0019], [0022] *<br>* paragraphs [0004], [0006], [0011], [0014], [0020], [0021], [0025]; claims 1-6 * | 1-3,6 | INV.<br>B01J31/02<br>B01J13/00<br>B01J23/50<br>B01J35/00<br>C23C18/20 |
| A | US 6 660 058 B1 (OH SEONG-GEUN [KR] ET AL) 9 December 2003 (2003-12-09)<br>* column 2, lines 21-37 *<br>* column 3, lines 6-30 *<br>* column 4, lines 53-65 *<br>* column 5, lines 7-40 * | 1-6 | |
| A | JP 61 276906 A (TANAKA PRECIOUS METAL IND) 6 December 1986 (1986-12-06)<br>* abstract * | 1-6 | |
| A | EP 1 491 656 A1 (ROHM & HAAS ELECT MATERIALS [US]) 29 December 2004 (2004-12-29)<br>* paragraphs [0014] - [0016], [0019] - [0023] *<br>* paragraphs [0044], [0049], [0053]; examples 1,7 * | 1-10 | TECHNICAL FIELDS SEARCHED (IPC)<br>B01J<br>C23C |

The present search report has been drawn up for all claims

| Place of search | Date of completion of the search | Examiner |
|---|---|---|
| Munich | 2 November 2011 | Bork, Ana-Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

1

EPO FORM 1503 03.82 (P04C01)

## ANNEX TO THE EUROPEAN SEARCH REPORT ON EUROPEAN PATENT APPLICATION NO. EP 11 17 4450

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2011

| Patent document cited in search report | | Publication date | Patent family member(s) | | | Publication date |
|---|---|---|---|---|---|---|
| US 2005032915 | A1 | 10-02-2005 | JP | 4272951 | B2 | 03-06-2009 |
| | | | JP | 2005054245 | A | 03-03-2005 |
| US 6660058 | B1 | 09-12-2003 | NONE | | | |
| JP 61276906 | A | 06-12-1986 | NONE | | | |
| EP 1491656 | A1 | 29-12-2004 | CN | 1572903 | A | 02-02-2005 |
| | | | JP | 2005013983 | A | 20-01-2005 |
| | | | KR | 20050001338 | A | 06-01-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61365911 A
- US 20080089836 A
- US 3567659 A


### Non-patent literature cited in the description


- **YUE et al.** Synthesis of polyamine flocculants and their potential use in treating dye wastewater. *School of Environmental Science and Engineering*